# FASCICULE DE BREVET EUROPEEN

(11) **EP 2 138 966 B1**
(45) Date de publication et mention de la délivrance du brevet: **23.05.2018**
(21) Numéro de dépôt: 09163521.9
(22) Date de dépôt: 23.06.2009
(51) Int. Cl.: H04M 3/42, H04M 3/493

(54) **Récupération d'une information relative à une communciation téléphonique depuis un terminal téléphonique via un serveur de communication**
Abruf von Telefonanrufinformationen von einem Mobiltelephonendgerät über einen Kommunikationsserver
Retrieving telephone call information from a telephone terminal via a communication server

(30) Priorité: 23.06.2008 FR 0854124
(43) Date de publication de la demande: 30.12.2009
(73) Titulaire: Alcatel Lucent, 91620 Nozay (FR)
(72) Inventeur: Litteaut, Jacques, 78160 MARLY LE ROY (FR); Rey, Jean-François, 29228 BREST (FR)
(74) Mandataire: Abel & Imray

(56) Documents cités:
- US-A- 6 097 792
- US-A1- 2002 095 462
- US-A1- 2003 005 066
- US-A1- 2003 233 247
- US-A1- 2007 136 432

## Description

La présente invention se rapporte au domaine de la gestion d'informations échangées au cours d'une communication téléphonique, en particulier à un procédé de récupération d'au moins une information depuis au moins l'un des terminaux téléphoniques d'au moins deux utilisateurs en communication via un serveur de communication.

Au cours d'une communication téléphonique, les interlocuteurs s'échangent couramment des renseignements susceptibles d'être utiles à chacun d'entre eux ultérieurement à la communication. Entre autre, lors d'échanges téléphoniques professionnels, il n'est pas rare qu'un certain nombre de tâches ou d'actions soient assignées à l'un des interlocuteurs.

Afin de pouvoir suivre l'avancement des tâches qui lui ont été affectées ou de ne pas oublier les renseignements qui lui ont été transmis lors de la communication, un interlocuteur reporte généralement ces informations dans un agenda ou dans une liste d'actions à effectuer. Bien que les agendas papier soient encore utilisés, les interlocuteurs reportent classiquement les informations dans des applications de gestion de tâches. Ces applications consistent notamment en des agendas électroniques implémentés sur des PDA ou en des fonctionnalités d'agenda offertes par les clients de messagerie, tels que par exemple Outlook®, installés sur les ordinateurs personnels ou professionnels des interlocuteurs.

Cependant, l'interlocuteur n'a pas toujours la possibilité d'accéder à son application de gestion de tâches pour y saisir les informations pertinentes qui lui auront été transmises au cours de la communication.

En effet, de nombreux terminaux téléphoniques ne sont pas équipés d'agenda électronique et il n'est pas rare que les interlocuteurs ne soient pas à proximité de leur ordinateur lorsqu'ils reçoivent ou passent une communication. Ainsi, l'interlocuteur ne pourra pas reporter les informations dans son agenda ou dans sa liste de tâches à effectuer avant d'être de retour à son bureau où se trouve l'accès à une application susceptible de lui communiquer des informations relatives à son emploi du temps.

Une situation similaire se produit lorsqu'un interlocuteur désire reporter les divers renseignements communiqués pendant la conversation téléphonique dans des fichiers de renseignement électroniques ou des applications collaboratives présents sur/partagés par l'ordinateur personnel ou professionnel de l'interlocuteur.

Or, plus le délai entre la fin de la communication téléphonique et la saisie des informations dans une application est long, plus l'utilisateur risque d'oublier les renseignements qui lui ont été transmis ou les tâches qui lui ont été assignées lors de la communication.

La présente invention vise à diminuer le risque de perte d'information en permettant à l'utilisateur de récupérer les informations qu'il aura jugées pertinentes depuis son terminal téléphonique dès la fin de la communication. US2003/0233247 décrit un terminal mobile, lequel reçoit un calendrier commercial d'un serveur de commerce mobile, crée en fonction de données stockés dans un serveur spécial. Dans ce but, un premier objet de l'invention concerne un procédé de récupération d'au moins une information relative à une communication téléphonique entre au moins deux terminaux téléphoniques appartenant à des utilisateurs différents via un serveur de communication, depuis au moins l'un des deux terminaux téléphoniques, le procédé comprenant :
- détection de la clôture de la communication par l'un des utilisateurs au niveau du serveur de communication ;
- en réponse à ladite détection, activation, pour l'un au moins des utilisateurs, d'un service de récupération d'information de ladite au moins une information par le serveur de communication ;
ledit service de récupération comprenant, pour chacun des utilisateurs pour lequel il a été activé, les étapes suivantes :
- sélection, à travers au moins un des deux terminaux ou à travers le serveur de communication, d'un formulaire de récupération à partir d'une liste de formulaires de récupération préalablement enregistrés, en fonction d'au moins un critère ;
- soumission, par le serveur de communication, du formulaire de récupération sélectionné à l'utilisateur ; et
- transmission, à travers au moins un des deux terminaux, du formulaire de récupération complété par l'utilisateur avec ladite au moins une information vers une base de données.

Avantageusement, ledit au moins un critère est une caractéristique technique dudit terminal téléphonique. Ainsi, le formulaire sélectionné est adapté au terminal téléphonique et peut donc être soumis et complété correctement par l'utilisateur.

En variante ou en combinaison, ledit au moins un critère est une préférence de l'utilisateur préalablement enregistrée. Une prise en compte des préférences de l'utilisateur permet la sélection d'un formulaire certainement approprié au type d'information que l'utilisateur souhaite récupérer.

De façon avantageuse, le service de récupération comprend, en outre, une étape de création d'une tâche à partir du formulaire de récupération complété, ladite tâche étant alors transmise, lors de l'étape de transmission vers une base de données d'une application de gestion de tâches. Cette étape permet de mettre à jour automatiquement les données d'un agenda électronique de l'utilisateur à partir des informations récupérées à l'aide du formulaire complété.

Un second objet de l'invention concerne un serveur de communication via lequel est établie une communication téléphonique entre au moins deux terminaux téléphoniques appartenant respectivement à au moins deux utilisateurs, ledit serveur de communication est apte à détecter la clôture de la communication par l'un des utilisateurs et à activer un service de récupération d'au moins une information relative à ladite communication téléphonique pour l'un au moins des utilisateurs en réponse à la détection de la clôture de la communication, et ledit serveur de communication comprend, pour la réalisation dudit service de récupération :
- des moyens de sélection permettant la sélection d'un formulaire de récupération en fonction d'au moins un critère ;
- des moyens de soumission permettant la soumission dudit formulaire de récupération à l'utilisateur et la récupération dudit formulaire complété avec ladite au moins une information ; et
- des moyens de transmission permettant la transmission du formulaire de récupération complété vers une base de données.

D'autres caractéristiques et avantages de l'invention apparaîtront à la lecture de la description qui va suivre en références aux dessins annexés dans lesquels :
- la figure 1 représente schématiquement une architecture préférée d'un serveur de communication permettant la récupération d'au moins une information conformément à l'invention ;
- la figure 2 illustre, sous la forme d'un organigramme, différentes étapes relatives à la création d'une tâche suite à la récupération d'au moins une information.

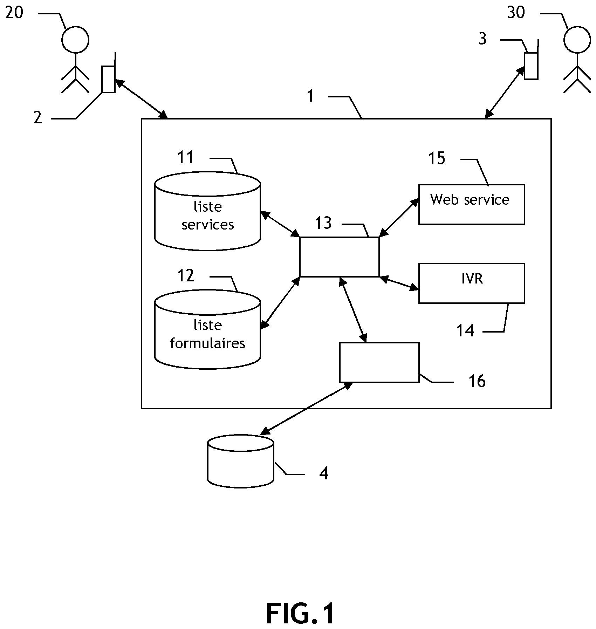

Comme le montre la figure 1, un serveur de communication 1 permet qu'une communication téléphonique ait lieu entre plusieurs terminaux téléphoniques 2, 3 appartenant respectivement à différents utilisateurs 20, 30.

Classiquement, le serveur de communication 1 est apte à mettre en place un certain nombre de services de gestion d'appel, les différents services pouvant être présents dans une base de données de services 11. Le serveur de communication 1 est également apte à créer et maintenir des fichiers de suivi de communication comprenant des données telles que, entre autre, la durée de la communication, le nombre de participants, les numéros et/ou adresses des terminaux 2, 3 entre lesquels la communication a lieu.

Conformément au procédé de l'invention, lorsqu'un des interlocuteurs 20, 30 met fin à la communication, le serveur de communication 1 détecte la clôture de la communication et active un service de récupération d'information. Le service de récupération d'information peut être activé pour l'interlocuteur 20, 30 ayant clos la communication et/ou également pour un interlocuteur 20, 30 étant resté en liaison avec le serveur de communication 1.

Le service de récupération comprend, pour chacun des utilisateurs 20, 30 (chacun des interlocuteurs ayant participé à la communication) pour lequel il est activé, une première étape de sélection de formulaire de récupération à partir d'une liste de formulaires préalablement enregistrés en fonction d'au moins un critère. Un tel critère peut consister en une caractéristique technique du terminal téléphonique 2, 3 utilisé pour effectuer la communication. En variante ou en combinaison, le critère peut également consister en une préférence de l'utilisateur 20, 30 préalablement enregistrée.

Une fois la sélection du formulaire adéquate effectuée, une étape de soumission du formulaire à l'utilisateur 20, 30 a lieu. Le formulaire de récupération est soumis par l'intermédiaire du terminal téléphonique 2, 3. La soumission du formulaire peut être réalisée sous forme vocale. Alternativement, la soumission du formulaire est réalisée sous forme d'un affichage sur le terminal téléphonique 2, 3.

Puis, l'utilisateur 20, 30 complète alors le formulaire de récupération avec au moins une information qu'il aura échangée et jugée pertinente pendant la communication. Ensuite, le formulaire de récupération complété par l'utilisateur 20, 30 avec l'information à récupérer est transmis vers une base de données 4. L'information récupérée pourra alors être consultée par l'utilisateur 20, 30 ultérieurement à la communication lorsque ce dernier aura à sa disposition une application possédant un accès à la base de données 4.

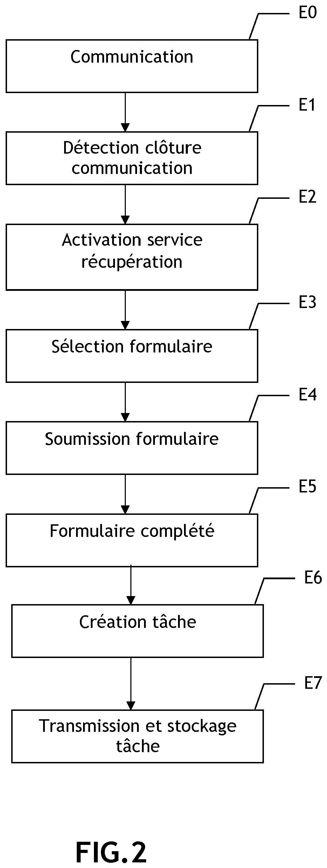

En référence aux figures 1 et 2, les différentes fonctionnalités du serveur de communication 1 ainsi que les différentes étapes mises en oeuvre pour la récupération d'au moins une information vont être détaillées.

Comme présenté sur la figure 2, deux interlocuteurs 20, 30 sont en communication par l'intermédiaire de leurs terminaux téléphoniques 2, 3 respectifs. Les terminaux téléphoniques 2, 3 peuvent être des téléphones mobiles, des terminaux de téléphonie classique ou des terminaux adaptés pour établir une communication téléphonique par voix sur IP.

La communication entre les terminaux téléphoniques est établie via un serveur de communication 1 (Etape E0 sur figure 2).

Lorsqu'un des interlocuteurs 20, 30 décide de quitter la communication, il se déconnecte (raccroche) du serveur de communication 1. Conformément au procédé de l'invention, le serveur de communication 1 détecte alors que l'un des interlocuteurs 20, 30 de la communication a clôturé la communication (Etape E1 sur figure 2) et déclenche le service de récupération d'information présent dans sa base de données 11 de services (Etape E2 sur figure 2).

Une fois déclenché, le service de récupération d'information consulte le fichier de suivi de communication relatif à la communication entre les interlocuteurs 20, 30. Le service de récupération possède alors un ensemble de caractéristiques de la communication telles que notamment, l'interlocuteur 20, 30 à l'initiative de la communication (l'appelant), l'interlocuteur ayant été appelé, l'interlocuteur ayant clos la communication ainsi que les numéros et/ou adresses des différents terminaux 2, 3 utilisés lors de ladite communication.

Selon le paramétrage du service de récupération d'information dans le serveur de communication 1, le service peut être activé pour l'ensemble des interlocuteurs de la communication ou uniquement pour l'appelant ou pour l'appelé.

Avantageusement, le serveur de communication comporte une liste d'utilisateurs 20, 30 pour lesquels le service de récupération peut être activé. Ainsi, lorsque le serveur de communication 1 détecte la clôture d'une communication, il active le service de récupération d'information pour l'ensemble des utilisateurs ayant participé à la communication présents dans la liste.

Pour chacun des utilisateurs 20, 30 pour lequel il est activé, le service de récupération d'information déclenche une application 13 afin de soumettre un formulaire et de le récupérer une fois complété par l'utilisateur 20, 30.

Cette application peut être implémentée sur chacun des terminaux 2, 3. Elle peut également être centralisée dans le serveur de communication 1.

Plus précisément, dans le cas où l'application 13 est centralisée sur le serveur de communication 1, celle-ci effectue la sélection d'un formulaire de récupération à partir d'une liste de formulaires de récupération préalablement enregistrés dans une base de données 12 présente dans le serveur de communication 1 (Etape E3 sur figure 2).

Avantageusement, les différents formulaires de la liste auront été créés lors de l'initialisation du serveur de communication 1 par un administrateur du serveur 1. Chaque formulaire peut comporter une indication concernant les caractéristiques techniques qu'un terminal téléphonique 2, 3 doit nécessairement posséder ainsi que les fonctionnalités devant nécessairement être installées sur le serveur de communication 1 pour que le formulaire puisse être soumis et complété correctement par l'utilisateur 20, 30.

A titre d'exemple, lorsque le formulaire est un fichier VXML (Voice XML) destiné à être soumis à un utilisateur vocalement, il peut alors être fourni une indication précisant d'une part, que le terminal téléphonique 2, 3 doit être capable d'interagir avec le serveur de communication à l'aide d'une fonction de type DTMF (Dual Tone Multi Frequency), et d'autre part, que le serveur de communication 1 doit être équipé d'un serveur vocal interactif 14. Un tel serveur vocal est classiquement dénommé unité IVR (Interactive Voice Response Unit).

De façon analogue, si le formulaire est un fichier XML ou HTML destiné à être soumis graphiquement à l'utilisateur 20, 30, il peut être intéressant de préciser que le terminal téléphonique 2, 3 doit posséder une interface graphique capable de supporter l'affichage d'un tel formulaire.

Ainsi, une fois déclenchée, l'application 13 consulte le fichier de suivi de communication afin de déterminer le type du terminal téléphonique 2, 3 de l'utilisateur 20, 30 pour lequel le service de récupération a été activé. Une fois le type du terminal 2, 3 identifié, l'application est en mesure de sélectionner un formulaire de récupération en fonction d'au moins une caractéristique technique du terminal téléphonique 2, 3.

De façon avantageuse, le serveur de communication 1 contient, de plus, des préférences relatives aux utilisateurs. Si tel est le cas, l'application 13 sélectionne un formulaire en fonction d'au moins une préférence de l'utilisateur 20, 30. Ces préférences peuvent être enregistrées dans la liste des utilisateurs 20, 30, précédemment mentionnée, pour lesquels le service de récupération peut être activé. Ces préférences peuvent consister en une précision quant à la nature de la soumission, vocale ou visuelle, par laquelle l'utilisateur 20, 30 désire se voir soumettre le formulaire.

Avantageusement, chaque utilisateur aura créé ses propres formulaires. Ainsi, lors de la soumission du formulaire, l'utilisateur 20, 30 pourra compléter plus rapidement et plus efficacement le formulaire par les informations à récupérer. En effet, puisque l'utilisateur aura lui-même créé le formulaire, il connaîtra, dans le cas d'un formulaire vocal, l'enchaînement des questions auxquelles il faudra répondre, et, dans le cas d'un formulaire graphique, l'emplacement des champs à compléter.

Lorsque le formulaire de récupération est sélectionné, l'application 13 déclenche les différents modules 14, 15 du serveur de communication 1 nécessaires à la soumission du formulaire.

Plus précisément, lorsque le service de récupération est activé pour un utilisateur 20, 30 ayant clôturé la communication, l'application 13 déclenche un appel du terminal 2, 3 de l'utilisateur 20, 30 par le serveur de communication 1 en vue de l'établissement d'une nouvelle communication entre ces deux dispositifs. La soumission du formulaire de récupération est alors réalisée au cours de cette communication ultérieure, établie entre le serveur de communication 1 et le terminal téléphonique 2, 3 de l'utilisateur 20, 30.

Au contraire, lorsque le service de récupération est activé pour un utilisateur 20, 30 resté en liaison avec le serveur de communication, la soumission du formulaire de récupération est réalisée sur la liaison par commutation déclenchée par l'activation du service de récupération.

En réalisant soit un nouvelle communication soit une simple commutation, le service de récupération peut ainsi être appliqué à l'ensemble des participants de la communication qu'ils aient clôturé ou non la communication. En conséquence, aucun des interlocuteurs n'est privilégié et il n'est pas nécessaire à un utilisateur d'exiger que son interlocuteur raccroche en premier pour qu'il puisse se voir activer le service de récupération.

Une fois la nouvelle communication établie ou la commutation effectuée, l'application 13 fournit le formulaire aux modules 14, 15 adaptés à réaliser la soumission (Etape E4 sur figure 2).

Lorsque le formulaire sélectionné est à soumettre sous forme vocale, l'application 13 transmet le formulaire sélectionné à une unité IVR 14 qui joue le formulaire à l'utilisateur 20, 30. Le formulaire consiste en une série de questions jouées par l'IVR sur le terminal 2, 3 de l'utilisateur 20, 30. La première question du formulaire consiste notamment à proposer le service de récupération à l'utilisateur 20, 30. Ce dernier a la possibilité d'accepter ou de refuser le formulaire. En cas de refus, le service de récupération se termine et la liaison entre le serveur de communication 1 et le terminal téléphonique 2, 3 de l'utilisateur est libérée.

En cas d'acceptation, les questions du formulaire sont adressées vocalement les unes après les autres à l'utilisateur 20, 30. Ce dernier peut répondre aux questions par l'intermédiaire du clavier de son terminal téléphonique 2, 3. Dans ce cas, le formulaire de récupération est complété (Etape E5 sur figure 2) par l'utilisateur grâce à une fonction de type DTMF.

L'utilisateur peut également répondre aux questions en énonçant les réponses dans le combiné de son terminal téléphonique 2, 3. Dans ce cas, le formulaire de récupération est complété (Etape E5 sur figure 2) par l'utilisateur grâce à une fonction de reconnaissance vocale.

Avantageusement, certaines questions peuvent être laissées sans réponse de la part de l'utilisateur 20, 30. Ce dernier peut également décider de stopper l'enchaînement de questions avant que l'ensemble du formulaire n'ait été joué. Cette possibilité peut être réalisée par l'utilisation d'une combinaison de touches particulière dans le cas de l'utilisation d'une fonction DTMF. L'arrêt prématuré du formulaire peut également être réalisé suite à la reconnaissance du mot « stop » prononcé par l'utilisateur 20, 30.

De façon alternative, lorsque le formulaire sélectionné est à soumettre sous forme graphique, l'application 13 transmet le formulaire sélectionné à un service Web qui transmet le formulaire au terminal 2, 3. Le formulaire est ensuite soumis à l'utilisateur 20, 30 sur l'interface graphique du terminal 2, 3.

Si l'utilisateur 20, 30 accepte le formulaire qui lui est soumis, celui-ci complète (Etape E5 sur figure 2) les champs du formulaire laissés vides au moyen d'un clavier ou d'un autre module d'interface graphique présent sur son terminal 20, 30. De façon avantageuse, il n'est pas nécessaire que l'utilisateur 20, 30 remplisse l'ensemble des champs vides du formulaire avant de le retransmettre au serveur de communication 1.

Une fois le formulaire complété en tout ou partie par l'utilisateur 20, 30, l'application 13 le transmet à un module d'interface 16. Le module d'interface 16 le transmet alors à une base de données 4 dans laquelle il sera stocké (Etape E7 sur figure 2). L'utilisateur 20, 30 peut alors consulter ultérieurement les informations qui ont été récupérées grâce au service de récupération.

Avantageusement, l'enregistrement de la communication effectué par le serveur de communication 1 est joint au formulaire de récupération complété et est également transmis à la base de données 4. Cette adjonction peut s'avérer particulièrement intéressante dans la mesure où le formulaire de récupération doit être court pour minimiser le temps d'exécution du service de récupération et qu'en conséquence, l'information récupérée grâce au formulaire complété est succincte. Ainsi, lors de la consultation ultérieure de l'information, l'utilisateur 20, 30 pourra la compléter en écoutant l'enregistrement de la communication téléphonique.

De façon avantageuse, le module d'interface 16 crée une tâche à partir du formulaire de récupération complété (Etape E6 sur figure 2). La tâche ainsi créée est alors transmise vers la base de données de gestion 4 qui n'est autre que la base de données d'une application de gestion de tâches (Etape E7 sur figure 2). Ainsi, l'agenda électronique de l'utilisateur directement connecté, ou pouvant être synchronisé avec les informations contenues dans la base de données 4 est automatiquement mis à jour. La tâche créée par le service de récupération suite à la communication téléphonique apparaît alors dans l'agenda électronique de l'utilisateur 20, 30.

La tâche peut également consister en la création d'un message électronique à destination du serveur de messagerie de l'utilisateur 20, 30. Ainsi, suite à la récupération de l'information par le service de récupération, l'utilisateur 20, 30 recevra automatiquement un nouveau message dans sa boîte aux lettres électronique contenant les informations essentielles échangées lors de la conversation téléphonique.

Bien que les différentes caractéristiques et avantages de l'invention aient été décrits en se référant, d'une part, à une communication ne faisant intervenir que deux utilisateurs, et d'autre part, à une application 13 ainsi qu'à une liste de formulaires de récupération intégrées dans le serveur de communication 1, l'invention n'est pas limitée à une telle réalisation. Le procédé de l'invention peut être appliqué lorsqu'une communication entre plus de deux interlocuteurs est réalisée depuis plus de deux terminaux téléphoniques via le serveur de communication. De plus, chaque terminal 2, 3 peut également comprendre une telle application et de tels formulaires. Dans un tel mode de réalisation, le service de récupération déclenche l'application 13 présente dans chacun des terminaux téléphoniques 2, 3 des utilisateurs 20, 30 ayant participé à la communication. Le formulaire complété peut alors être transmis à la base de données 4 directement depuis le terminal 2, 3 téléphonique ou alors par l'intermédiaire du serveur de communication 1.

## Revendications

1. Procédé de récupération d'au moins une information relative à une communication téléphonique entre au moins deux terminaux téléphoniques (2,3) appartenant à des utilisateurs différents (20, 30) via un serveur de communication (1), depuis au moins l'un des deux terminaux téléphoniques (2, 3), le procédé comprenant une:
- détection (E1) de la clôture de la communication par l'un des utilisateurs (20, 30) au niveau du serveur de communication (1);
**caractérisé en ce qu'**il comprend :
- en réponse à ladite détection, activation (E2), pour l'un au moins des utilisateurs (20, 30), d'un service de récupération de ladite au moins une information par le serveur de communication (1) ;
ledit service de récupération comprenant, pour chacun des utilisateurs (20, 30) pour lequel il a été activé, les étapes suivantes :
- la sélection (E3), à travers au moins un des deux terminaux (2, 3) ou à travers le serveur de communication (1), d'un formulaire de récupération à partir d'une liste de formulaires de récupération préalablement enregistrés, en fonction d'au moins un critère ;
- la soumission (E4), par le serveur de communication (1), du formulaire de récupération sélectionné à l'utilisateur (20, 30);
- transmission (E7), à travers au moins un des deux terminaux (2, 3), du formulaire de récupération complété par l'utilisateur (20, 30) avec ladite au moins une information vers une base de données (4).

2. Procédé selon la revendication 1, **caractérisé en ce que** ledit au moins un critère est une caractéristique technique dudit terminal téléphonique (2, 3).

3. Procédé selon l'une quelconque des revendications précédentes, **caractérisé en ce que** ledit au moins un critère est une préférence de l'utilisateur (20, 30) préalablement enregistrée.

4. Procédé selon l'une quelconque des revendications précédentes, **caractérisé en ce que** ledit service de récupération comprend en outre, une étape de création (E6) d'une tâche à partir du formulaire de récupération complété, ladite tâche étant alors transmise, lors de l'étape de transmission (E7) vers une base de données (4) d'une application de gestion de tâches.

5. Procédé selon l'une quelconque des revendications précédentes, **caractérisé en ce que**, le service de récupération étant activé pour un utilisateur (20, 30) ayant clôturé ladite communication, ladite soumission (E4) dudit formulaire de récupération est réalisée au cours d'une communication ultérieure établie entre le serveur de communication (1) et le terminal téléphonique (2, 3) dudit utilisateur (20, 30) ayant clôturé la communication.

6. Procédé selon l'une quelconque des revendications 1 à 4, **caractérisé en ce que**, le service de récupération étant activé pour un utilisateur (20, 30) étant resté en liaison avec ledit serveur de communication (1), ladite soumission (E4) du formulaire de récupération est réalisée sur ladite liaison par commutation déclenchée par l'activation du service de récupération.

7. Procédé selon l'une quelconque des revendications précédentes, **caractérisé en ce que** ladite soumission (E4) du formulaire de récupération audit utilisateur (20, 30) est réalisée sous forme vocale.

8. Procédé selon la revendication précédente 7, **caractérisé en ce que** ledit formulaire de récupération consiste en un fichier de type VXML.

9. Procédé selon l'une quelconque des revendications 7 ou 8, **caractérisé en ce que** ledit formulaire de récupération est complété (E5) par ledit utilisateur (20, 30) grâce à une fonction de type DTMF.

10. Procédé selon l'une des revendications 7 ou 8, **caractérisé en ce que** le formulaire de récupération est complété (E5) par ledit utilisateur (20, 30) grâce à une fonction de reconnaissance vocale.

11. Procédé selon l'une quelconque des revendications 1 à 6, **caractérisé en ce que** ladite soumission (E4) du formulaire de récupération audit utilisateur (20, 30) est réalisé sous forme d'un affichage dudit formulaire sur le terminal téléphonique (2, 3) dudit utilisateur (20, 30), et **en ce que** ledit formulaire de récupération est complété (E5) par ledit utilisateur (20, 30) grâce à un module d'interface graphique dudit terminal téléphonique (2, 3).

12. Procédé selon la revendication 11, **caractérisé en ce que** ledit formulaire de récupération consiste en un fichier de type XML, HTML.

13. Serveur de communication (1) via lequel est établie une communication téléphonique entre au moins deux terminaux téléphoniques (2, 3) appartenant respectivement à au moins deux utilisateurs (20, 30), ledit serveur de communication étant apte à détecter la clôture de la communication par l'un des utilisateurs (20, 30), **caractérisé en ce qu'**il est apte à activer un service de récupération d'au moins une information relative à ladite communication téléphonique pour l'un au moins des utilisateurs en réponse à la détection de la clôture de la communication, et
**en ce que**, ledit serveur de communication (1) comprend, pour la réalisation dudit service de récupération :
- des moyens (11, 12, 13) de sélection permettant la sélection d'un formulaire de récupération en fonction d'au moins un critère ;
- des moyens (14, 15) de soumission permettant la soumission dudit formulaire de récupération à l'utilisateur (20, 30) et la récupération dudit formulaire complété avec ladite au moins une information ; et
- des moyens (16) de transmission permettant la transmission du formulaire de récupération complété vers une base de données (4).

14. Serveur de communication (1) selon la revendication 13, **caractérisé en ce que** ledit au moins un critère est une caractéristique du terminal téléphonique de (2, 3) de l'utilisateur (20, 30) et/ou une préférence de l'utilisateur (20, 30) préalablement enregistrée.

15. Serveur de communication selon l'une quelconques des revendications 13 à 14, **caractérisé en ce que** les moyens (16) de transmissions sont aptes à créer une tâche à partir dudit formulaire de récupération complété et à transmettre ladite tâche vers une base de données (4) d'une application de gestion de tâches.

## Patentansprüche

1. Verfahren zum Abruf mindestens einer Information bezüglich einer Telefonkommunikation zwischen mindestens zwei Telefonendgeräten (2, 3), die unterschiedlichen Benutzern (20, 30) gehören, über einen Kommunikationsserver (1), ausgehend von mindestens einem der beiden Telefonendgeräte (2, 3), wobei das Verfahren umfasst:
- eine Erkennung (E1) des Abschlusses der Kommunikation durch einen der Benutzer (20, 30) auf der Ebene des Kommunikationsservers (1),
**dadurch gekennzeichnet, dass** es umfasst:
die Aktivierung (E2) eines Dienstes zum Abruf der mindestens einen Information für den mindestens einen der Benutzer (20, 30) durch den Kommunikationsserver (1) als Reaktion auf die Erkennung,
wobei der Abrufdienst für jeden der Benutzer (20, 30), für den er aktiviert wurde, die folgenden Schritte umfasst:
- Auswahl (E3) eines Abrufformulars über mindestens eines der beiden Endgeräte (2, 3) oder durch den Kommunikationsserver (1), ausgehend von einer Liste zuvor abgespeicherter Abrufformulare, abhängig von mindestens einem Kriterium,
- Übermittlung (E4) des ausgewählten Abrufformulars an den Benutzer (20, 30) durch den Kommunikationsserver (1),
- Senden (E7) des vom Benutzer (20, 30) ausgefüllten Abrufformulars mit der mindestens einen Information an eine Datenbank (4) über mindestens eines der beiden Endgeräte (2, 3) .

2. Verfahren nach Anspruch 1, **dadurch gekennzeichnet, dass** das mindestens eine Kriterium ein technisches Merkmal des Telefonendgerätes (2, 3) ist.

3. Verfahren nach einem der vorhergehenden Ansprüche, **dadurch gekennzeichnet, dass** das mindestens eine Kriterium eine zuvor abgespeicherte Präferenz des Benutzers (20, 30) ist.

4. Verfahren nach einem der vorhergehenden Ansprüche, **dadurch gekennzeichnet, dass** der Abrufdienst ferner einen Schritt zur Erzeugung (E6) einer Aufgabe aufgrund des ausgefüllten Abrufformulars umfasst, wobei die Aufgabe dann während des Schrittes des Sendens (E7) an eine Datenbank (4) einer Aufgabenverwaltungsanwendung gesendet wird.

5. Verfahren nach einem der vorhergehenden Ansprüche, **dadurch gekennzeichnet, dass** der Abrufdienst für einen Benutzer (20, 30) aktiviert wird, der die Kommunikation abgeschlossen hat, wobei die Übermittlung (E4) des Abrufformulars im Laufe einer späteren Kommunikation erfolgt, die zwischen dem Kommunikationsserver (1) und dem Telefonendgerät (2, 3) des Benutzers (20, 30), der die Kommunikation abgeschlossen hat, aufgebaut wird.

6. Verfahren nach einem der Ansprüche 1 bis 4, **dadurch gekennzeichnet, dass**, wenn der Abrufdienst für einen Benutzer (20, 30) aktiviert wird, der mit dem Kommunikationsserver (1) in Verbindung geblieben ist, die Übermittlung (E4) des Abrufformulars auf der Verbindung durch ein Umschalten erfolgt, das durch die Aktivierung des Abrufdienstes ausgelöst wurde.

7. Verfahren nach einem der vorhergehenden Ansprüche, **dadurch gekennzeichnet, dass** die Übermittlung (E4) des Abrufformulars an den Benutzer (20, 30) in Sprachform erfolgt.

8. Verfahren nach dem vorhergehenden Anspruch 7, **dadurch gekennzeichnet, dass** das Abrufformular aus einer Datei vom Typ VXML besteht.

9. Verfahren nach einem der Ansprüche 7 oder 8, **dadurch gekennzeichnet, dass** das Abrufformular vom Benutzer (20, 30) mittels einer Funktion vom Typ DTMF ausgefüllt (E5) wird.

10. Verfahren nach einem der Ansprüche 7 oder 8, **dadurch gekennzeichnet, dass** das Abrufformular vom Benutzer (20, 30) mittels einer Spracherkennungsfunktion ausgefüllt (E5) wird.

11. Verfahren nach einem der Ansprüche 1 bis 6, **dadurch gekennzeichnet, dass** die Übermittlung (E4) des Abrufformulars an den Benutzer (20, 30) in Form einer Anzeige des Formulars auf dem Telefonendgerät (2, 3) des Benutzers (20, 30) erfolgt und das Abrufformular vom Benutzer (20, 30) mittels eines graphischen Benutzeroberflächenmoduls des Telefonendgerätes (2, 3) ausgefüllt (E5) wird.

12. Verfahren nach Anspruch 11, **dadurch gekennzeichnet, dass** das Abrufformular aus einer Datei vom Typ XML, HTML besteht.

13. Kommunikationsserver (1), über den eine Telefonkommunikation zwischen mindestens zwei Telefonendgeräten (2, 3), die jeweils mindestens zwei Benutzern (20, 30) gehören, aufgebaut wird, wobei der Kommunikationsserver dazu befähigt ist, den Abschluss der Kommunikation durch einen der Benutzer (20, 30) zu erkennen, **dadurch gekennzeichnet, dass** er befähigt ist, einen Dienst zum Abruf mindestens einer Information bezüglich der Telefonkommunikation für mindestens einen der Benutzer als Reaktion auf die Erkennung des Abschlusses der Kommunikation zu aktivieren, und
dass der Kommunikationsserver (1) zur Ausführung des Abrufdienstes folgendes umfasst:
- Auswahlmittel (11, 12, 13), welche die Auswahl eines Abrufformulars abhängig von mindestens einem Kriterium erlauben,
- Übermittlungsmittel (14, 15), welche die Übermittlung des Abrufformulars an den Benutzer (20, 30) und den Abruf des ausgefüllten Formulars mit der mindestens einen Information erlauben, und
- Sendemittel (16), die das Senden des ausgefüllten Abrufformulars an eine Datenbank (4) erlauben.

14. Kommunikationsserver (1) nach Anspruch 13, **dadurch gekennzeichnet, dass** das mindestens eine Kriterium ein zuvor abgespeichertes Merkmal des Telefonendgerätes (2, 3) des Benutzers (20, 30) und/oder eine zuvor abgespeicherte Präferenz des Benutzers (20, 30) ist.

15. Kommunikationsserver nach einem der Ansprüche 13 bis 14, **dadurch gekennzeichnet, dass** die Sendemittel (16) dazu befähigt sind, eine Aufgabe aufgrund des ausgefüllten Abrufformulars zu erzeugen und die Aufgabe an eine Datenbank (4) einer Aufgabenverwaltungsanwendung zu senden.

## Claims

1. A method for recovering at least one piece of information relative to a telephone communication between at least two telephone terminals (2, 3) belonging to different users (20, 30) via a communication server (1), from at least one of the two telephone terminals (2, 3), the method comprising:
- a detection (E1) of the closing of the communication by one of the users (20, 30) at the communication server (1);
**characterized in that** it comprises:
- in response to said detection, an activation (E2), for at least one of the users (20, 30), of a service for recovering said at least one piece of information by the communication server (1);
said recovery service comprising, for each of the users (20, 30) for which it has been activated, the following steps:
- the selection (E3), through at least one of the two terminals (2, 3) or through the communication server (1), of a recovery form from a list of recovery forms previously recorded, based on at least one criterion;
- the submission (E4), by the communication server (1), of the selected recovery form to the user (20, 30);
- the transmission (E7), through at least one of the two terminals (2, 3), of the recovery form completed by the user (20, 30) with said at least one piece of information to a database (4).

2. The method according to claim 1, **characterized in that** said at least one criterion is a technical characteristic of said telephone terminal (2, 3).

3. The method according to any one of the preceding claims, **characterized in that** said at least one criterion is a user preference (20, 30) previously stored.

4. The method according to any one of the preceding claims, **characterized in that** said recovery service further comprises a step for creating (E6) a task from the completed recovery form, said task then being sent, during the transmission step (E7), to a database (4) of a task management application.

5. The method according to any one of the preceding claims, **characterized in that**, the recovery service being activated for a user (20, 30) having closed said communication, said submission (E4) of said recovery form is done during a later communication established between the communication server (1) and the telephone terminal (2, 3) of said user (20, 30) having closed the communication.

6. The method according to any one of claims 1 to 4, **characterized in that**, the recovery service being activated for a user (20, 30) having remained in connection with said communication server (1), said submission (E4) of the recovery form is done on said connection by switching triggered by the activation of the recovery service.

7. The method according to any one of the preceding claims, **characterized in that** said submission (E4) of the recovery form to said user (20, 30) is done in voice form.

8. The method according to the preceding claim 7, **characterized in that** said recovery form consists of a VXML file.

9. The method according to any one of claims 7 or 8, **characterized in that** said recovery form is completed (E5) by said user (20, 30) using a DTMF-type function.

10. The method according to one of claims 7 or 8, **characterized in that** the recovery form is completed (E5) by said user (20, 30) using a voice recognition function.

11. The method according to any one of claims 1 to 6, **characterized in that** said submission (E4) of the recovery form to said user (20, 30) is done in the form of a display of said form on the telephone terminal (2, 3) of said user (20, 30), and **in that** said recovery form is completed (E5) by said user (20, 30) using a graphic interface module of said telephone terminal (2, 3).

12. The method according to claim 11, **characterized in that** said recovery form consists of a XML, HTML file.

13. A communication server (1) through which a telephone communication is established between at least two telephone terminals (2, 3) respectively belonging to at least two users (20, 30), said communication server being able to detect the closing of the communication by one of the users (20, 30), **characterized in that** it is capable of activating a service for recovering at least one piece of information relative to said telephone communication for at least one of the users in response to the detection of the closing of the communication, and
**in that** said communication server (1) comprises, to perform said recovery service:
- selection means (11, 12, 13) making it possible to select a recovery form based on at least one criterion;
- submission means (14, 15) making it possible to submit said recovery form to the user (20, 30) and to recover said completed form with said at least one piece of information; and
- transmission means (16) making it possible to send the completed recovery form to a database (4).

14. The communication server (1) according to claim 13, **characterized in that** said at least one criterion is a characteristic of the telephone terminal (2, 3) of the user (20, 30) and/or a preference of the user (20, 30) previously stored.

15. The communication server according to any one of claims 13 to 14, **characterized in that** the transmission means (16) are capable of creating a task from said completed recovery form and sending said task to a database (4) of a task management application.
